(19) Europäisches Patentamt
European Patent Office
Office européen des brevets

(11) EP 1 375 548 B1

(12) # EUROPÄISCHE PATENTSCHRIFT

(45) Veröffentlichungstag und Bekanntmachung des Hinweises auf die Patenterteilung:
**20.09.2006 Patentblatt 2006/38**

(51) Int Cl.:
***C08G 18/80*** *(2006.01)*

(21) Anmeldenummer: **03012665.0**

(22) Anmeldetag: **04.06.2003**

(54) **Blockierte Polyisocyanate**

Blocked polyisocyanates

Polyisocyanates bloqués

(84) Benannte Vertragsstaaten:
**AT BE BG CH CY CZ DE DK EE ES FI FR GB GR HU IE IT LI LU MC NL PT RO SE SI SK TR**

(30) Priorität: **17.06.2002 DE 10226926**

(43) Veröffentlichungstag der Anmeldung:
**02.01.2004 Patentblatt 2004/01**

(73) Patentinhaber: **Bayer MaterialScience AG**
**51368 Leverkusen (DE)**

(72) Erfinder:
- **Schelhaas, Michael, Dr.**
  **50733 Köln (DE)**
- **Gürtler, Christoph, Dr.**
  **50676 Köln (DE)**
- **Baumbach, Beate, Dr.**
  **51399 Burscheid (DE)**
- **Füssel, Christian**
  **47918 Tönisvorst (DE)**

(56) Entgegenhaltungen:
**US-A- 5 071 937**

- **WICKS D A ET AL: "BLOCKED ISOCYANATES III: PART A. MECHANISMS AND CHEMISTRY" PROGRESS IN ORGANIC COATINGS, XX, XX, Bd. 36, 1999, Seiten 148-172, XP001065209 ISSN: 0300-9440**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 375 548 B1

## Beschreibung

Die Erfindung betrifft blockierte Polyisocyanate, deren Herstellung und Verwendung in Einkomponentenlacken.

Die Blockierung von Polyisocyanaten zum zeitweisen Schutz der Isocyanat-Gruppen ist eine bekannte Arbeitsmethode und wird z.B. in Houben Weyl, Methoden der organischen Chemie XIV/2, S. 61-70 beschrieben. Härtbare Zusammensetzungen, die blockierte Polyisocyanate enthalten, finden beispielsweise in Polyurethan-(PUR)-Lacken Verwendung.

Es ist bekannt, einkomponentige und lagerstabile Bindemittel für PUR-Einbrennlacke durch Abmischen von blockierten Polyisocyanaten mit OH-haltigen Polykondensaten bzw. Polymerisaten (Polyestern bzw. Polyacrylaten) herzustellen.

Das Blockierungsmittel erfüllt in diesen Einkomponenten-Lacken zwei Aufgaben:

Zum einen verhindert es die vorzeitige Reaktion der damit blockierten NCO-Gruppen mit der OH-Komponente, und zum anderen reguliert es durch seine spezifische Deblockierungseigenschaft die Aushärtung der Lacke in einem bestimmten Temperaturbereich. Neben diesen gewünschten bringen die einzelnen Blockierungsmittel aber auch unerwünschte Eigenschaften mit, wie z.B. Kristallisations- oder Vergilbungsneigung, mangelhafte Wirtschaftlichkeit, Umweltprobleme und kritische physiologische Wirkungen.

Um dies zu verdeutlichen, seien beispielhaft Butanonoxim und 3,5-Dimethylpyrazol genannt. Beide Blockierungsmittel sind mit den bekannten Lackpolyisocyanaten gut verträglich und deblockieren etwa innerhalb von 30 Minuten bei 130-140°C. Auf der anderen Seite führt Butanonoxim zur Thermovergilbung des eingebrannten Lackes, und die Substanz als solche ist toxikologisch bedenklich. Dimethylpyrazol ist relativ teuer aus Acetylaceton und Hydrazinhydrat herzustellen, und es verleiht Beschichtungen einen unangenehmen Geruch (siehe z.B. T. Engbert, E. König, E. Jürgens, Farbe & Lack, Curt R. Vincentz Verlag, Hannover 07/1996).

Die Abspaltung des Blockierungsmittels und dessen gasförmiges Entweichen aus dem Lackfilm kann darüber hinaus zur Blasenbildung im Lack führen. Gegebenenfalls kann eine Nachverbrennung des emittierten Blockierungsmittels notwendig werden. Eine Übersicht prinzipiell geeigneter Blockierungsmittel findet sich z.B. bei Wicks et al. in Progress in Organic Coatings **1975**, 3, S. 73-79, **1981,** 9, S. 3-28 und **1999,** 36, S. 148-172.

Für das Einsatzgebiet des Coil-Coatings müssen die blockierten Polyisocyanate bei Einbrenntemperaturen von bis zu 254°C PMT (Peak Metal Temperature) innerhalb von sehr kurzer Zeit vernetzbar sein, und während des Einbrennvorgangs dürfen die Polymere nur eine sehr geringe, bevorzugt keine Thermovergilbung aufweisen. Die erforderliche Einbrenntemperatur ist hauptsächlich von der Reaktivität des blockierten Polyisocyanats bzw. von dem für dieses Verfahren verwendeten Katalysator abhängig.

Der vorliegenden Erfindung lag daher die Aufgabe zugrunde, neue blockierte Polyisocyanat-Systeme bereitzustellen, die ohne Abspaltung des Blockierungsmittels, d.h. emissionsfrei, reagieren und über niedrige Vemetzungstemperaturen, also über eine hohe Reaktivität verfügen. Darüberhinaus sollten diese blockierten Polyisocyanat-Systeme bei Umgebungstemperatur lagerstabil sein und sich insbesondere auch in Kombination mit geeigneten Polyolkomponenten zur Herstellung von Einkomponenten-Lacken, insbesondere Einbrennlacken, eignen.

Diese Aufgabe konnte mit den erfindungsgemäß blockierten Polyisocyanaten und den auf deren Basis erhältlichen Bindemitteln gelöst werden.

Es wurde nun gefunden, dass zur Blockierung von Polyisocyanaten CH-azide Verbindungen mit der Struktur eines aktivierten cyclischen Ketons, besonders des Cyclopentanon-2-carboxyesters, sehr gut geeignet sind, um ohne eine unerwünschte Abspaltung volatiler Stoffe Beschichtungen mit geringer Vergilbungstendenz zu erhalten.

Gegenstand der Erfindung sind daher mit aktivierten cyclischen Ketonen blockierte Polyisocyanate, Verfahren zu deren Herstellung sowie auf deren Basis erhältliche 1-K-Lacke, insbesondere Einbrennlacke, die dadurch gekennzeichnet sind, dass erfindungsgemäße blockierte Polyisocyanate als Vemetzerkomponente für organische Polyhydroxylverbindungen eingesetzt werden.

Für das erfindungsmäße Verfahren werden organische Polyisocyanate mit mindestens zwei Isocyanatgruppen, deren Isocyanatgruppe mit CH-aziden cyclischen Ketonen der allgemeinen Formel (I),

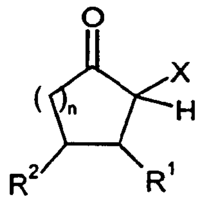

(I)

in welcher

X eine elektronenziehende Gruppe,

$R^1$ und $R^2$ unabhängig voneinander die Reste H, $C_1$-$C_{20}$-(Cyclo)alkyl, $C_6$-$C_{24}$-Aryl, $C_1$-$C_{20}$-(Cyclo)alkylester oder -amid, $C_6$-$C_{24}$-Arylester oder -amid, gemischt aliphatisch/aromatische Reste mit 1 bis 24 Kohlenstoffatomen, die auch Teil eines 4 bis 8-gliedrigen Ringes sein können, darstellen,
und

n eine ganze Zahl von 0 bis 5 ist.

Diese Polyisocyanate weisen einen Gehalt an blockierten Isocyanatgruppen (berechnet als NCO) von insgesamt 0,1 bis 25 Gew.-% auf. Sie sind in der älteren eigenen Anmeldung DE-A 10 132 016 bereits beschrieben worden.

Bevorzugt wird ein Gehalt an blockierten Isocyanatgruppen (berechnet als NCO) von 0,1 bis 15,6 Gew.-% bezogen auf das Polyisocyanat. Besonders bevorzugt ist ein Gehalt an blockierten Isocyanatgruppen (berechnet als NCO) von 0,1 bis 14 Gew.-%. Gegebenenfalls kann eine Teilblockierung des Polyisocyanats vorliegen; die nicht blokkierten Isocyanatgruppen können dann für weitere Reaktionen verwendet werden. Typischerweise werden alle Isocyanatgruppen blockiert.

Bei der elektronenziehenden Gruppe X kann es sich um alle Substituenten handeln, die zu einer CH-Azidität des α-ständigen Wasserstoffes führen. Dies können beispielsweise Estergruppen, Amidgruppen, Sulfoxidgruppen, Sulfongruppen, Nitrogruppen, Phosphonatgruppen, Nitrilgruppen, Isonitrilgruppen, Carbonylgruppen oder Polyhalogenalkylgruppen wie auch Halogene, insbesondere Fluor und Chlor, sein. Bevorzugt sind Nitril-und Estergruppen, besonders bevorzugt sind die Carbonsäuremethylester- und Carbonsäureethylestergruppe.

Geeignet sind auch Verbindungen der allgemeinen Formel (I), deren Ring gegebenenfalls Heteroatome, wie Sauerstoff-, Schwefel-, oder Stickstoffatome enthält.

Bevorzugt weist das aktivierte cyclische Keton der Formel (I) eine Ringgröße von 5 (n = 1) oder 6 (n = 2) auf.

Bevorzugte Verbindungen der allgemeinen Formel (I) sind Cyclopentanon-2-carboxymethylester und -carboxyethylester, Cyclopentanon-2-carbonsäurenitril, Cyclohexanon-2-carboxymethylester und -carboxyethylester oder Cyclopentanon-2-carbonylmethyl. Besonders bevorzugt sind Cyclopentanon-2-carboxymethylester und -carboxyethylester sowie Cyclohexanon-2-carboxymethylester und -carboxyethylester. Die Cyclopentanonsysteme sind technisch leicht durch eine Dieckmann Kondensation von Adipinsäuredimethylester oder Adipinsäurediethylester erhältlich. Cyclohexanon-2-carboxymethylester kann durch Hydrierung von Salicylsäuremethylester hergestellt werden.

Das zu blockierende Polyisocyanat kann jedes organische Polyisocyanat sein, das zur Vernetzung von Verbindungen mit aktivem Wasserstoff geeignet ist, d.h. aliphatische inclusive der cycloaliphatischen, aromatische und heterocyclische Polyisocyanate mit mindestens zwei Isocyanatgruppen sowie Gemische davon. Typische Beispiele für Polyisocyanate sind aliphatische Isocyanate wie Di- oder Triisocyanate, z.B. Butandiisocyanat (BDI), Pentandiisocyanat, Hexandiisocyanat (HDI), 4-Isocyanatomethyl-1,8-octandiisocyanat (Triisocyanatononan, TIN) oder cyclische Systeme, wie 4,4'-Methylen-bis(cyclohexylisocyanat) (Desmodur® W, Bayer AG, Leverkusen), 3,5,5-Trimethyl-1-isocyanato-3-isocyanatomethylcyclohexan (IPDI) sowie ω,ω'-Diisocyanato-1,3-dimethylcyclohexan ($H_6$XDI). Beispiele für aromatische Polyisocyanate sind 1,5-Naphthalendiisocyanat, Diisocyanato-diphenylmethan (MDI) bzw. Roh-MDI, Diisocyanatomethylbenzol (TDI), insbesondere das 2,4 und das 2,6-Isomere und technische Gemische der beiden Isomeren sowie 1,3-Bis(isocyanato-methyl)benzol (XDI). Ebenfalls gut geeignet sind auch Polyisocyanate, die durch Umsetzung der Di-oder Triisocyanate mit sich selbst über Isocyanatgruppen erhältlich sind, wie Uretdione oder Carbodiimidverbindungen, oder wie Isocyanurate und Iminooxadiazindione, die durch Reaktion dreier Isocyanatgruppen gebildet werden. Die Polyisocyanate können ebenfalls monomere Di- und/oder Triisocyanate und/oder oligomere Polyisocyanate mit Biuret-, Allophanat- und Acylhamstoff- Strukturelementen, monomerenarme oder anteilig modifizierte monomere Di-, Triisocyanate sowie beliebige Gemische der genannten Polyisocyanate enthalten.

Gut geeignet sind ebenfalls Polyisocyanatprepolymere, die durchschnittlich mehr als eine Isocyanatgruppe

pro Molekül aufweisen. Sie werden durch Vorreaktion eines molaren Überschusses, beispielsweise eines der obengenannten Polyisocyanate, mit einem organischen Material, erhalten, das mindestens zwei aktive Wasserstoffatome pro Molekül aufweist, z.B. in Form von Hydroxygruppen.

Bevorzugte Polyisocyanate sind solche, die eine Uretdion-, Isocyanurat-, Iminooxadiazindion-, Acylharnstoff-, Biuret- oder Allophanatstruktur enthalten, z.B. solche auf der Basis von Butandiisocyanat (BDI), Pentandiisocyanat, Hexandiisocyanat (HDI), 4-Isocyanatomethyl- 1 ,8-octandiisocyanat (Triisocyanatononan, TIN) oder cyclische Systeme, wie 4,4'-Methylen-bis(cyclohexylisocyanat) (Desmodur® W, Bayer AG, Leverkusen), 3,5,5-Trimethyl-1-isocyanato-3-isocyanatomethylcyclohexan (IPDI) sowie ω,ω'-Diisocyanato-1,3-dimethylcyclohexan ($H_6XDI$). Bevorzugte Beispiele für aromatische Polyisocyanate sind 1,5-Naphthalendiisocyanat, Diisocyanato-diphenylmethan (MDI) bzw. Roh-MDI, Diisocyanatomethylbenzol (TDI), insbesondere das 2,4 und das 2,6-Isomere und technische Gemische der beiden Isomeren sowie 1,3-Bis(isocyanato-methyl)benzol (XDI).

Besonders bevorzugte Polyisocyanate sind solche auf der Basis von Hexandiisocyanat (HDI), 4,4'-Methylenbis(cyclohexylisocyanat) sowie von 3,5,5-Trimethyl-1-isocyanato-3-isocyanatomethylcyclohexan (IPDI).

Im folgenden ist ein Verfahren zur Herstellung der erfindungsgemäß blockierten organischen Polyisocyanate beschrieben, das dadurch gekennzeichnet ist, dass Polyisocyanate mit CH-aziden cyclischen Ketonen der allgemeinen Formel (I),

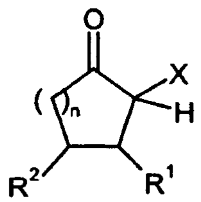

(I)

in welcher

| | |
|---|---|
| X | eine elektronenziehende Gruppe, |
| $R^1$ und $R^2$ | unabhängig voneinander die Reste H, $C_1$-$C_{20}$-(Cyclo)alkyl, $C_6$-$C_{24}$-Aryl, $C_1$-$C_{20}$-(Cyclo)alkylester oder -amid, $C_6$-$C_{24}$-Arylester oder -amid, gemischt aliphatisch/ aromatische Reste mit 1 bis 24 Kohlenstoffatomen, die auch Teil eines 4 bis 8- gliedrigen Ringes sein können, darstellen, und |
| n | eine ganze Zahl von 0 bis 5 ist, |

in Gegenwart eines Katalysators umgesetzt werden, wobei pro Isocyanatgruppen-Äquivalent der zu blockierenden Polyisocyanate 0,8 bis 1,2 mol des cyclischen Ketons der Formel (I) eingesetzt werden.

Bevorzugt wird ein Isocyanatgruppen-Äquivalent der zu blockierenden Polyisocyanatkomponente mit 1 Äquivalent Blockierungsmittel zur Reaktion gebracht.

Als Katalysatoren sind Alkali- und Erdalkalimetallbasen, wie z.B. gepulvertes Natriumcarbonat (Soda) geeignet. Es können auch, je nach verwendetem cyclischen Keton, Trinatriumphosphat oder Aminbasen wie Dabco (1,4-Diazabicyclo[2.2.2]octan) eingesetzt werden. Ebenfalls sind die Carbonate der Metalle der zweiten Nebengruppe geeignet. Bevorzugt wird Natriumcarbonat oder Kaliumcarbonat eingesetzt. Alternativ kann die Umsetzung des cyclischen Ketons mit dem Isocyanat auch in Gegenwart von Zinksalzen als Katalysatoren durchgeführt werden. Besonders bevorzugt ist die Umsetzung mit Zink-2-ethylhexanoat. Es können auch Gemische von Katalysatoren verwendet werden.

In dem erfindungsgemäßen Verfahren werden, bezogen auf die eingesetzten Polyisocyanate, 0,05 bis 10 Gew.-%, bevorzugt 0,07 bis 3 Gew.-% des Katalysators zugesetzt. Besonders bevorzugt werden 0,1 bis 1 Gew.-% des Katalysators verwendet.

Die Umsetzung kann bei 0°C bis 140°C durchgeführt werden. Bevorzugt ist ein Temperaturbereich von 15°C bis 90°C.

Die Blockierung kann in Substanz oder aber in Gegenwart geeigneter Lösungsmittel erfolgen. Geeignete Lösungsmittel sind die üblichen Lacklösungsmittel, wie z.B. Butylacetat, Methoxypropylacetat oder Solventnaphtha, wie es beispielsweise von der Fa. Exxon-Chemie als aromatenhaltiges Lösungsmittel angeboten wird, sowie Gemische der genannten Lösungsmittel. Bevorzugt wird die Blockierung in den genannten Lösungsmitteln vorgenommen, wobei der einzustellende Festkörpergehalt in der Regel zwischen 10 und 90% beträgt.

Neben den erfindungsgemäß eingesetzten cyclischen Ketonen der allgemeinen Formel (I), können auch zusätzlich Gemische beliebiger Blockierungsmittel im erfindungsgemäßen Verfahren mitverwendet werden, um zu den jeweils gewünschten Lackeigenschaften zu gelangen, wobei der Anteil an Verbindungen der Formel (I) mindestens 30 Gew.-%, bevorzugt 50 Gew.-%, besonders bevorzugt 100 Gew.-% beträgt.

Gegenstand der Erfindung ist auch ein Verfahren zur Herstellung von 1-K-Einbrennlacken, dadurch gekennzeichnet, dass erfindungsgemäße organische Polyisocyanate als Vernetzerkomponente für organische Polyhydroxylverbindungen eingesetzt werden.

Die für die erfindungsgemäße Verwendung blockierten Polyisocyanate zeichnen sich dadurch aus, dass sie in Kombination mit einer geeigneten organischen Polyhydroxylverbindung und in Anwesenheit von geeigneten Katalysatoren bei Einbrennzeiten von maximal zwei Minuten, bevorzugt innerhalb von 5 bis maximal 60-80 Sekunden, besonders bevorzugt innerhalb von 5 bis maximal 35sec aushärten. Die Ofentemperatur beträgt dabei 300-400°C. Dabei hängen die Einbrennbedingungen naturgemäß vom eigesetzten Material sowie der Blechstärke des zu beschichtendes Blechbandes ab. Die Ofentemperatur liegt in der Regel bei einer Temperatur von minimal 180°C und maximal 260°C PMT. Bevorzugt ist ein Temperaturbereich von 210°C bis 245°C PMT. Besonders bevorzugt ist ein Bereich von 216°C bis 241°C PMT. Die lacktechnischen Eigenschaften des eingebrannten Lackfilms, wie MEK (Methylethyl-keton) Lösemittelbeständigkeit, Härte und Elastizität bei gegebener Einbrenntemperatur und gegebener Einbrennzeit sind unter anderem von der Menge des eingesetzten Katalysators abhängig. Bevorzugt wird über einen Zeitraum von 38 Sekunden bei einer Temperatur von 232°C eingebrannt. Es sind auch Temperaturen von 216°C möglich. Bei dem Substrat Aluminium resultiert eine Einbrennzeit von 33 Sekunden. Die optimalen spezifischen Bedingungen werden auf für den Fachmann übliche Weise durch orientierende Vorversuche ermittelt und in der Anwendung werden die Temperaturen im Coil Coating Ofen über ein Sensitivband kontrolliert.

Geeignete Katalysatoren für die Vernetzung sind beispielsweise DBTL (Dibutylzinndilaurat), Titan-2-ethylhexanoat, Titan-tetraisopropylat sowie andere gängige Titan-(IV)-Verbindungen, Zirkon-2-ethylhexanoat sowie andere gängige Zirkon-(IV)-Verbindungen, Aluminiumtriethylat, Scandiumtrifluormethansulfonat, Yttrium-2-ethylhexanoat, Yttriumtrifluormethansulfonat, Lanthan-2-ethylhexanoat, Lanthantrifluormethansulfonat, Kobalt-2-ethylhexanoat, Kupfer-2-ethylhexanoat, Indiumtrifluormethansulfonat, Galliumacetylacetonat, Nickelacetylacetonat, Lithium-2-ethylhexanoat, Lithiumtrifluormethansulfonat, Natrium-2-ethylhexanoat, Natriumacetat, Natriumtrifluormethansulfonat, Magnesium-2-ethylhexanoat, Magnesiumtrifluormethansulfonat, Calcium-2-ethylhexanoat, Calciumtrifluormethansulfonat, Zink-2-ethylhexanoat, Zinkdithiocarbamat, Zink-acetylacetonat, Zink-tetramethylheptadionat, Zink-salicylat, Zinkchlorid sowie andere gängige Zink-(II)-Verbindungen, Wismut-2-ethylhexanoat sowie Wismutacetat. Bevorzugte Katalysatoren sind Zink- und Wismutverbindungen, besonders bevorzugt sind Zink-2-ethylhexanoat und Wismut-2-ethylhexanoat.

Geeignete Polyhydroxylverbindungen für diesen Einsatzzweck, sowie weitere Details bezüglich der Herstellung und Anwendung derartiger Einbrennlacke können der Literatur, z.B. der DE-A 19 738 497 oder der EP-A 0 159 117, entnommen werden.

Besonders bevorzugte Anwendungsgebiete für die erfindungsgemäßen Produkte ist ihre Verwendung als Vernetzer im Coil-Coating Bereich.

Eine Übersicht über anwendbare Polyole für das Coil-Coat Verfahren findet sich in der nachstehenden Tabelle. Es können Polyesterpolyole, Polycarbonatpolyole und Polyacrylatpolyole Verwendung finden. Im Prinzip sind alle Bindemittel mit ausreichend hohem OH-Gehalt einsetzbar.

| Handelsname / Marke | Typ | Lieferform |
|---|---|---|
| **Alkynol 1665 SN/IB** | Ölfreier, verzweigter und gesättigter Polyester | 65% SN100/IB |
| **Alkynol VP LS 2013** | Ölfreier, verzweigter Polyester | 70% SN100 |
| **Alkynol VP LS 2326** | Ölfreier, verzweigter und gesättigter Polyester | 60% SN100 |
| **Desmophen 651 MPA** | Verzweigter Polyester | 67% MPA |
| **Desmophen 670** | Schwach verzweigter Polyester | lösemittelfrei |
| **Desmophen 690 MPA** | Verzweigter Polyester | 70% MPA |
| **Desmophen 1200** | Schwach verzweigter Polyester | lösemitttelfrei |
| **Desmophen 1652** | Ölfreier, linearer Polyester | lösemittelfrei |
| **Desmophen C 200** | Linearer Polycarbonat-polyester | lösemittelfrei |

Mit den erfindungsgemäß blockierten Polyisocyanaten werden hochwertige und abspalterfreie Beschichtungen oder Lacküberzüge mit ungewöhnlich geringen Vergilbungswerten erhalten.

Neben den genannten Komponenten können die erfindungemäßen Bindemittel noch weitere stabilisierende Zusätze, wie z. B. HALS-Amine oder Lösemittel enthalten sowie bis zu 5 Gew.-% einer OH-funktionellen Hydrazidverbindung (bezogen auf den Festkörper des fertigen Lacks). Als weitere Additive kommen noch z.B. CAB (Celluloseacetobutyrat) sowie z.B. Acronal® 4 F (Verlaufinittel und Entschäumer) in Frage.

Als Stabilisierungskomponente gegen Thermovergilbung kann das bereits in der EP-A 0 829 500 genannte Additionsprodukt von Hydrazinhydrat an 2 Mol Propylencarbonat mit nachfolgender Formel eingesetzt werden:

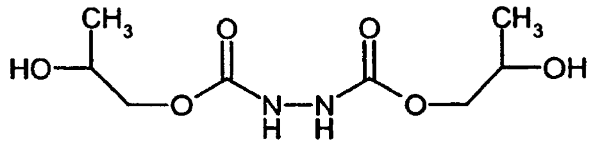

(Molekulargewicht 236)

**Ausgangsmaterialien: Blockierte Polyisocyanate**

Herstellung der mit α-aciden cyclischen Ketonen blockierten Polyisocyanate

Blockiertes Polyisocyanat A:

Zu einer Lösung von 193,5 g (1 val) Desmodur® N3300, gelöst in 14 g Methoxypropylacetat (8 Teile) und 29,9 g Xylol (17 Teile) (insgesamt 70%ige Lösung) werden 0,17g Zink-2-ethylhexanoat (0,05 Gew.%) als Katalysator gegeben. Die folgende Reaktion findet unter Stickstoffatmosphäre statt. Nachdem das Gemisch homogen verrührt ist, werden 156,2 g (1 val) Cyclopentanon-2-carboxyethylester (destilliert) vorsichtig zugetropft. Dabei sollte die Reaktionstemperatur nicht über 40°C steigen. Nach Ende der Zugabe des Esters wird noch so lange bei 40°C weitergerührt, bis der NCO-Wert Null erreicht (nach ca. 6 Stunden). Der blockierte theoretische NCO-Gehalt beträgt 8,3%. Anschließend wird mit 7% 2-Butanol bezogen auf Festkörper die gewünschte Viskosität eingestellt. Es werden weiterhin 2,5% auf Festkörper (8,7 g) Tinuvin® 770 DF hinzugesetzt. Bei dem eingesetzten Polyisocyanat handelt es sich um ein HDI-Polyisocyanat mit Isocyanuratstruktur, NCO-Gehalt 21,8%, Viskosität 3000 mPas, (Desmodur® N 3300, Bayer AG, Leverkusen).

Blockiertes Polyisocyanat B:

3 val (580,5 g) Desmodur® N3300 und 1 val (353 g) Desmodur® Z4470 werden unter Stickstoff in 415 g Xylol gelöst (70%ige Mischung nach Reaktion). Zu dieser Mischung werden 1,45 g (0,1 Gew.%) Zink-2-ethylhexanoat als Katalysator gegeben. Nachdem das Gemisch homogen verrührt ist werden 4 val (624,8 g) Cyclopentanon-2-carboxyethylester vorsichtig zugetropft. Dabei sollte die Reaktionstemperatur nicht über 40°C steigen. Nach Ende der Zugabe vom Ester wird noch so lange bei 40°C weitergerührt, bis der NCO-Wert nahe Null ist (ca. 12 h). Der blockierte NCO-Gehalt beträgt dann 8,1%. Nach Beendigung der Reaktion werden noch 101,7 g 2-Butanol (7% bezogen auf Festkörper) und 29 g (2% bezogen auf Festkörper) Tinuvin® 770 DF hinzugegeben. Bei dem eingesetzten Polyisocyanat handelt es sich um eine Mischung eines HDI-Polyisocyanats mit Isocyanuratstruktur, NCO-Gehalt 21,8%, Viskosität 3000 mPas, (Desmodur® N3300, Bayer AG, Leverkusen) und eines Polyisocyanats mit Isocyanuratstruktur auf der Basis von IPDI (NCO-Gehalt 11,9%, Viskosität 2000 mPas, Desmodur® Z4470, Bayer AG, Leverkusen).

Blockiertes Polyisocyanat C:

0,9 val (174,2 g) Desmodur® N3300 und 0,1 val (29 g) Desmodur® W-Trimer werden unter Stickstoff in 141,6 g Xylol gelöst (70%ige Mischung nach Reaktion). Zu dieser Mischung werden 0,351 g (0,1 Gew.%) Zink-2-ethylhexanoat als Katalysator gegeben. Nachdem das Gemisch homogen verrührt ist wird 1 val (156,2 g) Cyclopentanon-2-carboxyethylester vorsichtig zugetropft. Dabei sollte die Reaktionstemperatur nicht über 40°C steigen. Nach Ende der Zugabe vom Ester wird noch so lange bei 40°C weitergerührt bis der NCO-Wert nahe Null ist (ca. 12 h). Der blockierte NCO-Gehalt beträgt dann 8,16%. Nach Beendigung der Reaktion werden noch 7 g (2% bezogen auf Festkörper) Tinuvin 770 DF hinzugegeben. Bei dem eingesetzten Polyisocyanat handelt es sich um eine Mischung eines HDI-Polyisocyanats mit Isocyanuratstruktur, NCO-Gehalt 21,8%, Viskosität 3000 mPas, (Desmodur® N3300, Bayer AG, Leverkusen) und eines Polyisocyanats mit Isocyanuratstruktur auf der Basis von Desmodur W (13,5% Desmodur® N3300, Trimerisierungsgrad 20%, NCO-Gehalt 14,5%, 65% Feststoff (gelöst in Xylol/Methoxypropylacetat).

Das verwendete Blockierungsmittel Cyclopentanon-2-carboxyethylester wurde von der Firma Fluka bezogen.

**Als Vergleich herangezogene blockierte Polyisocyanate:**

BL 3175 (Bayer AG), vernetzendes Einbrennurethanharz auf Basis Hexamethylendiisocyanat, 75 %ig in Solventnaphtha 100 gelöst, Viskosität ca 3300 mPas, NCO-Gehalt (blockiert) ca. 11,1 %, Blockierungsmittel Butanonoxim.
BL 3370 (Bayer AG), aliphatisches vernetzendes Einbrennurethanharz, ca. 70 %ig in 1-Methoxypropylacetat-2 (MPA) gelöst, Viskosität ca 3500 1200 mPas, NCO-Gehalt (blockiert) ca. 8,9 %, Blockierungsmittel Diisopropylamin.
Verwendete Polyole: siehe folgende Tabelle.

Herstellung der erfindungsgemäßen Polyurethan Lacke

Die Herstellung der erfindungsgemäßen Lacke ist nach den Herstellvorschriften der blockierten Isocyanatkomponenten beschrieben.

**Tabelle:** Für das Coil-Coating Verfahren eingesetzte Polyole

| Handelsname /Marke | Type | Lieferform | Viskosität [mPa·s] | Saurezahl | OH-Anteil [%] | Equiv. gewicht |
|---|---|---|---|---|---|---|
| **Alkynol 1665 SN/IB** | ölfreier, verzweigter und gesättigter Polyester | 65% SN100/IB | 2700 ± 300 | ≤ 5,5 | ca. 1,7 | 1000 |
| **Alkynol VP LS 2013** | ölfreier, verzweigter Polyester | 70% SN100 | 4000 ± 200 | 5,0 ± 1,0 | ca. 2,0 | 850 |
| **Alkynol VP LS 2326** | ölfreier, verzweigter und gesättigter Polyester | 60% SN100 | ca. 1500 | ca. 2,2 | ca. 0,6 | 2830 |
| **Desmophen 651 MPA** | Verzweigter Polyester | 67% MPA | 14500 ± 3500 | ≤ 3,0 | 5,5 ± 0,4 | 309 |
| **Desmophen 670** | Schwach verzweigter Polyester | lösemittelfrei | > 200000 | ≤ 2,5 | 4,3 ± 0,4 | 395 |
| **Desmophen 690 MPA** | Verzweigter Polyester | 70% MPA | 10000 ± 3500 | ≤ 6,0 | 1,4 ± 0,2 | 1214 |
| **Desmophen 1200** | Schwach verzweigter Polyester | lösemitttelfrei | 300 ± 100 (70% in MPA) | ≤ 4,0 | ca. 5,0 | 340 |
| **Desmophen 1652** | ölfreier, linearer Polyester | lösemittelfrei | 11000 ± 2000 | ≤ 4,0 | 1,6 ± 0,2 | 1063 |
| **Desmophen C 200** | Linearer Polycarbonat-polyester | lösemittelfrei | 1050 ± 250 bei 75°C | ≤ 0,1 | 1,7 ± 0,2 | 1000 |

**1K-PUR-Coil Coating Decklacke, weiß, Polyolkomponente Alkynol® 1665** A = Polyisocyanat A, B = Polyisocyanat B, C = Polyisocyanat C

| | 1 | 2 | 3 | 4 | 5 |
|---|---|---|---|---|---|
| **Perlmühlenformulierung** (Kornfeinheit < 5 µm) | BL 3175 | BL 3370 | A | B | C |
| Alkynol 1665, 65 %ig in Solventnaphtha 100 Isobutanol 31,5:3,5 | 9,8 | 9,8 | 9,8 | 9,8 | 9,8 |
| Kronos 2160 | 29,3 | 29,3 | 29,3 | 29,3 | 29,3 |
| Solvesso 200 S (SN 200 S) | 7,8 | 7,8 | 7,8 | 7,8 | 7,8 |
| **Auflackung** | | | | | |
| Alkynol 1665, 65 %ige Lieferform | 21,5 | 20,0 | 19,3 | 19,1 | 19,2 |
| Desmodur BL 3175, 75%ig in Solventnaphtha 100 | 11,9 | | | | |
| Desmodur BL 3370, 70%ig in 1-Methoxypropylacetat-2 | | 14,1 | | | |
| A,70 %ig in Xylol / MPA 17 : 8 | | | 14,8 | | |
| B, 70 %ig in Xylol | | | | 15,0 | |
| C, 70 %ig in Xylol | | | | | 14,9 |
| Zink-2-ethylhexanoat, 10 %ig in SN 200 S | | | 0,7 | 0,7 | 0,7 |
| DBTL , 10 %ig in SN 200 S (3) | 0,7 | 0,7 | | | |
| Acronal 4 F, 50%ig in SN 200 S (4) | 1,5 | 1,5 | 1,5 | 1,5 | 1,5 |
| CAB 531-1, !0%ig in SN 200 S / Buyldiglykol 2:1 (5) | 7,3 | 7,3 | 7,3 | 7,3 | 7,3 |
| SN 200 S | 10,3 | 9,6 | 9,6 | 9,6 | 9,6 |
| | 100,0 | 100,0 | 100,0 | 100,0 | 100,0 |
| | Vergleichsbeispiele | | Erfindungsgemäß | | |

| | | |
|---|---|---|
| **Kenndaten** | Bindemittel | 29,3 |
| | Pigment | 29,3 |
| | Additive | 1,5 |
| | Lösemittel | 39,3 |
| | | 100,00 |
| | OH/ NCO-Verhältnis | 1 : 1 |
| | Bindemittel/Pigmentverhältnis | 1 : 1 |
| | Festkörpergehalt (Gew.-%) | ca. 60 |
| | Verdünnung | Solvesso 200 S |
| | Applikationsviskosität, DIN EN ISO 2431 mit 5mm Düse / 23 °C | ca. 100 s |
| | Einbrennbedingung | PMT: siehe Prüfergebnisse |
| | | Gew.-% |
| **Additive** (wirksame Substanz auf Bindemittel-FK berechnet) | Katalysatorzusatz | 0,2 |
| | Acronal® 4F | 2,6 |
| | Celluloseacetobutyrat | 2,5 |
| **Bemerkungen** | (4 + 5) Die Kombination aus CAB und Acronal® 4 F sorgt für Entlüftung und Verlauf. | |

**Lieferanten**

(1) Kronos International INC, Leverkusen

(2) Deutsche Exxon, Köln

(3) Brenntag, Mülheim / Ruhr

(4) BASF AG, Ludwigshafen

(5) Krahn Chemie, Hamburg

**Eingesetzte Rohstoffe**

**Alkynol® 1665,** ölfreier gesättigter Polyester auf Basis von Isophthalsäure/Adipinsäure/NPG/Propylglykol, Bayer AG, Leverkusen, OH-Gehalt: 1,7 % auf die 65 %ige Lieferform in Solventnaphtha 100/Isobutanol 31,5:3,5

**CAB** (Celluloseacetobutyrat) Lieferant: Krahn Chemie Hamburg, Hersteller: Eastman Kingsport USA; **CAB 531-1** (ca. 53% Butyrylgehalt, Hydroxylgehalt 1,7% wird nicht mit berechnet)

**Acronal® 4 F** Hersteller BASF Ludwigshafen, Polymer auf Basis von Butylacrylat (Verlaufmittel und Entschäumer)

**Solvesso® 200 S** Hersteller Esso/Exxon Lösemittel Aromatengehalt 99%, Verdunstungszahl (Äther=1) ~ 1000

**Bestimmung des Weißwerts**

ASTM E 313, White index

Weißgrad nach Berger (ohne DIN)

Weißgrad = Ry +3 (Rz-Rx)

Der Gelbindex G nach DIN 6167 wird gemäß folgender Formel berechnet:

$$G = \frac{\underline{a \cdot x - b \cdot z}}{y} \cdot 100$$

X, Y + Z = Normfarbwerte nach DIN 5033

a = rot/grün Achse*
b = blau/gelb Achse**

**[0055]** * positive Werte ⇒ Roter negativ ⇒ Grüner
** positive Werte ⇒ Gelber negativ ⇒ Blauer

**Bestimmung der MEK-Beständigkeit**

Beschreibung der Methode (in Anlehnung an ECCA -T11 sowie DIN EN ISO 2812-1 und DIN EN 12720):
Der MEK-Wischtest ist eine Schnellprüfung um die endgültige Aushärtung des Lackfilms zu überprüfen. Dazu wird ein mit MEK getränkter Wattebausch mit einem konstanten Druck auf dem Lackfilm hin und her bewegt.
Gerät /Hilfsmittel: Waage (Marke Bizerba), Gewichtsteine 100 g, 1 kg und 2 kg

Duchführung:

Bei Schichtdicken bis 20 μm 1kg-Gegendruck, über 20 um 2 kg-Gegendruck verwenden.
Auf dem Wägeteller der Waage wird mittels Filmklammer und Antirutschfolie das Prüfblech befestigt. Die Waage wird mit Hilfe des 100 g-Gewichtsteins und dem Taraausgleich justiert. Ein mit MEK getränkter Wattebausch wird gegen den ausgewählten Prüfdruck auf dem Lackfilm hin und her bewegt, bis der Lackfilm zerstört ist.
Auswertung:
Die Anzahl der durchgeführten Doppelhübe bis zur Zerstörung der Beschichtung ist im Prüfbericht anzugeben, wobei maximal 100 Doppelhübe zu verrichten sind. Nach 100 gegebenenfalls erreichten Doppelhüben wird der Film hinsichtlich Veränderungen (Mattwerden, Erweichung) abgemustert.

**Bestimmung des T-bend Testes**

In Anlehnung an ECCA T 7. (ECCA: European Coil Coating Association) Beschreibung der Methode:

Zweck:

Dieses Verfahren beschreibt die Bestimmung des Widerstandes einer organischen Beschichtung gegen Rissbildung bei einer 180 °-Biegung.

Prinzip:

Bei diesem Versuch wird die Probe während 1-2 s parallel zur Walzrichtung um 180° gebogen, wobei sich die Beschichtung auf der Aussenseite befindet. Es muss ein enger Kontakt zwischen den Blechen bestehen, um eine gleichmässige Biegung zu gewährleisten. Der kleinste Biegeradius, der eine rissfreie Biegung der Probe erlaubt, bestimmt den Widerstand bei einer 180°-Biegung. Die Haftung wird dabei nach jeder Biegung mittels Klebeband überprüft.

Gerät:

Das Gerät, mit dem dieses Verfahren durchgeführt werden kann, besteht aus einem Schraubstock und einen Satz Schutzbacken.

Vorbereitung:

Die Proben werden mindestens 24 h bei Laborraumtemperatur und -luftfeuchte gelagert. Die Messungen werden unter den gleichen Bedingungen durchgeführt.
Wenn genauere Bedingungen vorgeschrieben sind oder im Schiedsfall sollen die Angaben gemäss der ISO 3270-1984 beachtet werden, nämlich 23 ± 2°C Temperatur und 50 ± 5 % relative Luftfeuchte.

Verfahren:

Es wird ein etwa 2 cm breiter Blechstreifen entgegen der Walzrichtung abgeschnitten. Dieser Blechstreifen während 1-2 sek parallel zur Walzrichtung um 180° gebogen, wobei sich die Beschichtung auf der Aussenseite befindet. Danach wird das Blech im Schraubstock eng zusammengepresst.
Die Biegekante wird mit einer 20 x Lupe auf Risse untersucht. Die Haftung wird danach durch dreimaliges aufpressen und abreißen eines Klebebandes geprüft.
Die Abmusterung dieser 0 T Biegung erfolgt mit R für Risse und H für Haftung mit der Bewertung von 0-5, wobei 0 der beste Wert und 5 der schlechteste Wert ist.
Nun wird solange das Blech um sich selbst gebogen, bis in Rissbildung und Haftung der Wert 0 erreicht wird.
Spätestens bei 3,0 T wird die Prüfung beendet.

**Nachreissfestigkeit**

Der verformte T-bend Streifen wird Temperatur-belastet, 30 min bei 100°C, und danach nochmals auf Risse abgemustert.

**Lackherstellung:**

Die Prüfung erfolgte im weißen Coil-Coating Decklack nach einer Standard-Rezeptur (Richtrezeptur RR 6830). Hierzu wurden zuerst mit dem ölfreien gesättigten Polyester ein Mahlgut nach folgender Perlmühlenformulierung hergestellt:

9,8 T1. ölfreier Polyester Alkynol® 1665, 65%ige Lieferform,
7,8 T1. Lösemittel Solvesso® 200 S
22,3 T1. Weißpigment Kronos 2330

Das Mahlgut wurde mit 2 mm Siliquarzperlen dispergiert.
Die Dispergierung erfolgte während 1 Std. auf dem Skandex® Mischer.
(Anmerkung: Auf Perlmühle und Skandex® Mischer (Schüttelmaschine) kann man mit der gleichen Formulierung arbeiten. Mit dem Skandex® Mischer hat man den Vorteil, dass mehrere Proben gleichzeitig dispergiert werden, und es wird in einem geschlossenenem Gefäß angerieben. Das anschliessende Absieben der Perlen erfolgt im Abzug.)
Das Mahlgut wird durch Absieben von den Glasperlen getrennt.
Unter Rühren werden die übrigen Lackkomponenten zugegeben.

21,5 T1. ölfreier Polyester Alkynol® 1665, 65 %ige Lieferform,
11,9 T1. blockiertes Polyisocyanat *)
0,7 T1. DBTL, 10 %ig in Solvesso® 200 S,
7,3 T1. Celluloseacetobutyrat CAB 531-1, 10 %ig in Solvesso® 200 S / Butyldiglykol 2:1
1,5 T1. Acrynol® 4 F, 50 %ig in Solvesso® 200 S
X T1 Solvesso® 200 S (Bei BL 3175 als blockiertes Polyisocyanat sind es 10,3 Tl)

*) Die Zusatzmenge an blockiertem PIC ändert sich je nach Äquivalentgewicht des PIC (in diesem Fall Desmodur® BL 3175-als Vergleich). Polyol und blockiertes Polyisocyanat werden äquivalent kombiniert, d.h. wenn weniger blockierte NCO-Gruppen zur Verfügung stehen muss der Anteil vom blockierten PIC erhöht werden. Die Äquivalentgewichte werden im Merkblatt angegeben.
Die Einstellung des Lackes auf Verarbeitungsviskosität von ca. 70 sec DIN 4/23° C, erfolgt durch Solvesso® 200 S.
Die Applikation des Lackes auf chromatierte Aluminiumbleche (1mm stark) erfolgte durch Rakeln.
Sofort nach dem Lackauftrag wurden die Bleche im Aalborgofen auf dem Drehteller eingebrannt.

PMT 210° C 30 sec bei 350°C Ofentemperatur

PMT 216° C 33 sec bei 350°C Ofentemperatur

PMT 224° C 35 sec bei 350°C Ofentemperatur

PMT 232° C 38 sec bei 350°C Ofentemperatur

PMT >254° C 50 sec bei 350°C Ofentemperatur

Die Trockenschichtdicke beträgt 20 - 22 μm.

**Coil-Coating-Lacke**
Bindemittel: Alkynol 1665
Bdm. Verhältnis: Äquivalent
Pigment:Titandioxid Kronos 2330
Bindem.-Pigment-Verhältnis: 1:1

Katalysator: 0,2%(ber. auf Bindemittel fest)
Einbrennbedingungen: 232°C(PMT)
Hantel: 42
Substrat: Al-Blech vorbehandelt mit Bonder 722

| **Untersuchtes blockiertes Polyisocyanat** | | | | | |
|---|---|---|---|---|---|
| | BL 3175* | Beisp. A | Beisp. B | Beisp. C | BL 3370 * |
| **Schichtdicke** [μm] ECCA-T1(*1) | 20-22 | 20-22 | 20-22 | 20-22 | 20-22 |
| **Weißgrad** Wb=Ry+3(Rz-Rx) (n.Berger) | 92,3 | 91,6 | 92,2 | 91,4 | 91,6 |
| **Gelbindex** | -3,1 | -2,4 | -2,6 | -2,5 | -2,8 |
| **Glanz** n.Gardner **60°** ECCA-T2 (1*) | **76** | **67** | **68** | **65** | **69** |
| **MEK-Wischtest**(PMT196°C)/Weißgrad | - | - | - | - | 95X /92,4 |
| **MEK-Wischtest**(PMT199°C)/Weißgrad | 10X /94,1 | **100X /94,6** | 65X /94,0 | 100M /93,9 | 100X /92,4 |
| **MEK-Wischtest**(PMT204°C)/Weißgrad | 95X /93,6 | 100X **/94,6** | 100M /94,3 | 100X /94,4 | 100X /92,5 |
| **MEK-Wischtest**(PMT210°C)/Weißgrad | 100X /93,6 | 100X /94,2 | 100X /94,0 | 100X / 94,1 | 100X /92,4 |
| **MEK-Wischtest**(PMT216°C)/Weißgrad | 100X /93,3 | 100X /93,8 | 100X /94,0 | 100X /94,2 | 100X /92,0 |
| **MEK-Wischtest**(PMT224°C)/Weißgrad | 100X /93,1 | 100X /93,0 | 100X /92,9 | 100X /93,2 | 100X /91,8 |
| **MEK-Wischtest**(PMT232°C) | 100X | 100X | 100X | 100X | 100X |
| **Mikrohärte HU korr.** (N/mm2) ϕ aus 3 Messungen | 128,7 | 55,1 | 99,8 | 86,0 | 140,7 |
| **Impact-Test** [inch/lbs] ECCA-T5 (*1) | 80 | 80 | 80 | 80 | 80 |
| **Haftfestigkeit** 6 mm Erichsentiefung im Gitterschnitt ECCA-T6 (*1) | 0 | 0-1 | 0 | 0 | 0 |
| **T-bend-Test** **T0,0** | R5 H1 | R5 H1 | R5 H1 | R5 H1 | R5 H1 |
| R=Risse **T0,5** | R1 H0 | R1 H0 | R2 H0 | R2 H0 | R1 H0 |
| H=Haftung **T1,0** | R0 | R0 | R0 | R0 | R0 |
| 0=bester Wert **T1,5** | | | | | |
| 5=schlechtester Wert **T2,0** | | | | | |
| **Nachreißtest 30 Min. 100°C** | T1,5+ T1,0- | T1,5+ T1,0- | T1,5+ T1,0+ | T1,5+ T1,0+ | T1,5+ T1,0- |

(*1) : in Anlehnung, da nicht im klimatisierten Raum gemessen

- = nachgerissen ; + = nicht nachgerissen

* Vergleichsbeispiel

## Patentansprüche

1. Organische Polyisocyanate mit mindestens zwei Isocyanatgruppen, deren Isocyanatgruppe mit CH-aziden cyclischen Ketonen der allgemeinen Formel (I),

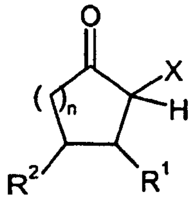

(I)

in welcher

X eine elektronenziehende Gruppe,
$R^1$ und $R^2$ unabhängig voneinander die Reste H, $C_1$-$C_{20}$-(Cyclo)alkyl, $C_6$-$C_{24}$-Aryl, $C_1$ -$C_{20}$-(Cyclo)alkylester oder -amid, $C_6$-$C_{24}$-Arylester oder -amid, gemischt aliphatisch/aromatische Reste mit 1 bis 24 Kohlenstoffatomen, die auch Teil eines 4 bis 8-gliedrigen Ringes sein können, darstellen,
n eine ganze Zahl von 0 bis 5 ist,

blockiert sind und einen Gehalt an blockierten Isocyanatgruppen (berechnet als NCO) von insgesamt 25 bis 0,1 Gew.-% aufweisen.

2. Organische Polyisocyanate gemäß Anspruch 1, **dadurch gekennzeichnet, dass** die elektronenziehenden Gruppe X ausgewält ist aus der Gruppe der Ester-Amid-, Sulfoxid-, Sulfon-, Nitro-, Phosphonat-, Nitril-, Isonitril-, Polyhalogenalkyl-, Halogen oder Carbonylgruppen.

3. Organische Polyisocyanate gemäß Anspruch 1 und 2, **dadurch gekennzeichnet, dass** CH-azide cyclische Ketone der allgemeinen Formel (I) Cyclopentanon-2-carboxylmethylester und -carboxyethylester, Cyclopentanon-2-carbonsäurenitril, Cyclohexanon-2-carboxymethylester und -carboxyethyl-ester oder Cyclopentanon-2-carbonylmethyl sind.

4. Organische Polyisocyanate gemäß Anspruch 1 und 2, **dadurch gekennzeichnet, dass** CH-azide cyclische Ketone der allgemeinen Formel (I) Cyclopentanon-2-carboxymethylester und -carboxyethylester, Cyclohexanon-2-carboxymethylester und -carboxyethylester sind.

5. Verfahren zur Herstellung organischer Polyisocyanate gemäß Anspruch 1, **dadurch gekennzeichnet, dass** Polyisocyanate mit CH-aziden cyclischen Ketonen der allgemeinen Formel (I),

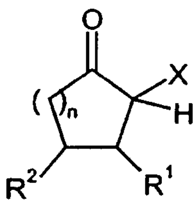

(I)

in welcher

X eine elektronenziehende Gruppe,
$R^1$ und $R^2$ unabhängig voneinander die Reste H, $C_1$-$C_{20}$-(Cyclo)alkyl, $C_6$-$C_{24}$-Aryl, $C_1$-$C_{20}$-(Cyclo)alkylester oder -amid, $C_6$-$C_{24}$-Arylester oder -amid, gemischt aliphatisch/aromatische Reste mit 1 bis 24 Kohlenstoffatomen, die auch Teil eines 4 bis 8-gliedrigen Ringes sein können, darstellen,
n eine ganze Zahl von 0 bis 5 ist,

in Gegenwart eines Katalysators umgesetzt werden, wobei pro Isocyanatgruppen-Äquivalent der zu blockierenden Polyisocyanate 0,8 bis 1,2 mol des cyclischen Ketons der Formel (I) eingesetzt werden.

6. Verfahren gemäß Anspruch 5, **dadurch gekennzeichnet, dass** das organische Polyisocyanat eine Uretdion-, Isocyanurat-, Iminooxadiazindion-, Acylhamstoff-, Biuret- oder Allophanatstruktur enthält.

7. Verfahren gemäß Anspruch 5, **dadurch gekennzeichnet, dass** als Katalysatoren Alkali- und Erdalkalimetallbasen oder Zinksalze oder andere LewisSäuren eingesetzt werden.

8. Verwendung von organischen Polyisocyanaten gemäß Ansprüchen 1 bis 4 zur Herstellung von PUR-Lacken.

9. Verwendung nach Anspruch 8, **dadurch gekennzeichnet, dass** es sich bei den PUR-Lacken um 1-K-PUR-Einbrennlacke handelt.

10. PUR-Lacke enthaltend organische Polyisocyanate gemäß Ansprüchen 1 bis 4.

11. Verwendung von Lacken gemäß Anspruch 10 für die Beschichtung von Coils.

## Claims

1. Organic polyisocyanates having at least two isocyanate groups, whose isocyanate group have been blocked with CH-acidic cyclic ketones of the general formula (I)

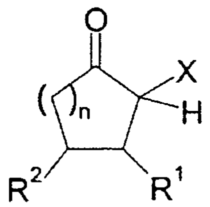

(I)

in which

X represents an electron-withdrawing group,
$R^1$ and $R^2$ independently of one another represent the radicals H, $C_1$-$C_{20}$-(cyclo)alkyl, $C_6$-$C_{24}$-aryl, $C_1$-$C_{20}$-(cyclo) alkyl ester or $C_1$-$C_{20}$-(cyclo)alkyl amide, $C_6$-$C_{24}$-aryl ester or $C_6$-$C_{24}$-aryl amide, mixed aliphatic/aromatic radicals having 1 to 24 carbon atoms, which may also be part of a 4 to 8-membered ring,
n is an integer from 0 to 5,

and have an overall blocked isocyanate group content (calculated as NCO) of from 20 to 0.1% by weight.

2. Organic polyisocyanates according to Claim 1, **characterized in that** the electron-withdrawing group X is selected from the group consisting of ester-amide, sulphoxide, sulphone, nitro, phosphonate, nitrile, isonitrile, polyhaloalkyl, halogen and carbonyl groups.

3. Organic polyisocyanates according to Claim 1 and 2, **characterized in that** CH-acidic cyclic ketones of the general formula (I) are cyclopentanone 2-carboxymethyl ester and 2-carboxyethyl ester, cyclopentanone-2-carbonitrile, cyclohexanone 2-carboxymethyl ester and 2-carboxyethyl ester or cyclopentanone-2-carbonylmethyl.

4. Organic polyisocyanates according to Claim 1 and 2, **characterized in that** CH-acidic cyclic ketones of the general formula (I) are cyclopentanone 2-carboxymethyl ester and 2-carboxyethyl ester, cyclohexanone 2-carboxymethyl ester and 2-carboxyethyl ester.

5. Process for preparing organic polyisocyanates according to Claim 1, **characterized in that** polyisocyanates are reacted with CH-acidic cyclic ketones of the general formula (I)

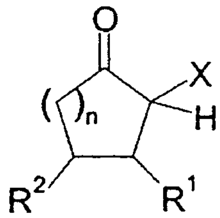

(I)

in which

X represents an electron-withdrawing group,
$R^1$ and $R^2$ independently of one another represent the radicals H, $C_{1-}C_{20}$-(cyclo)alkyl, $C_6$-$C_{24}$-aryl, $C_1$-$C_{20}$-(cylo) alkyl ester or $C_1$-$C_{20}$-(cyclo)alkyl amide, $C_6$-$C_{24}$-aryl ester or $C_6$-$C_{24}$-aryl amide, mixed aliphatic/aromatic radicals having 1 to 24 carbon atoms, which may also be part of a 4 to 8-membered ring,
n is an integer from 0 to 5,

in the presence of a catalyst, using from 0.8 to 1.2 mol of the cyclic ketone of the formula (I) per isocyanate group equivalent of the polyisocyanates for blocking.

6. Process according to Claim 5, **characterized in that** the organic polyisocyanate contains a uretdione, isocyanurate, iminooxadiazinedione, acylurea, biuret or allophanate structure.

7. Process according to Claim 5, **characterized in that** alkali metal and alkaline earth metal bases or zinc salts or other Lewis acids are used as catalysts.

8. Use of organic polyisocyanates according to Claims 1 to 4 for preparing PU coating materials.

9. Use according to Claim 8, **characterized in that** the PU coating materials are one-component (1 K) PU baking varnishes.

10. PU coating materials comprising organic polyisocyanates according to Claims 1 to 4.

11. Use of coating materials according to Claim 10 for coating coils.

## Revendications

1. Polyisocyanates organiques avec au moins deux radicaux isocyanate, dont les radicaux isocyanates sont bloqués avec des cétones cycliques à CH d'azide, de la formule générale (I) :

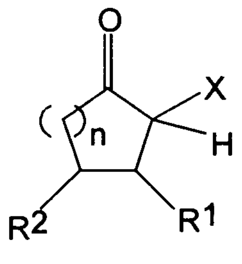

(I)

dans laquelle :

X représente un groupe électrocapteur,
$R^1$ et $R^2$ représentent indépendamment l'un de l'autre, les restes H, (cyclo)alcoyle en $C_1$-$C_{20}$, aryle en $C_6$-$C_{24}$, ester ou amide de (cyclo)alcoyle en $C_1$-$C_{20}$, ester ou amide d'aryle en $C_6$-$C_{24}$, reste aliphatique/aromatique mixte avec 1 à 24 atomes de carbone, qui peut être également une partie d'un cycle de 4 à 8 membres,

n représente un nombre entier allant de 0 à 5,
et présentent une teneur en radicaux isocyanate bloqués (calculé comme NCO) de au total, 25 à 0,1% en poids.

**2.** Polyisocyanates organiques suivant la revendication 1, **caractérisés en ce que** le groupe électrocapteur X est choisi parmi le groupe des radicaux ester, amide, sulfoxyde, sulfone, nitro, phosphonate, nitrile, isonitrile, polyhalogénoalcoyle, halogène ou carbonyle.

**3.** Polyisocyanates organiques suivant la revendication 1 ou 2, **caractérisés en ce que** la cétone cyclique à CH d'azide de la formule générale (I) est l'ester méthylique du cyclopentanone-2-carboxyle, l'ester éthylique du cyclopentanone-2-carboxyle, le nitrile de l'acide cyclopentanone-2-carboxylique, l'ester méthylique du cyclohexanone-2-carboxyle, l'ester éthylique du cyclohexanone-2-carboxyle ou le cyclopentanone-2-carbonylméthyle.

**4.** Polyisocyanates organiques suivant la revendication 1 ou 2, **caractérisés en ce que** la cétone cyclique à CH d'azide de la formule générale (I) est l'ester méthylique du cyclopentanone-2-carboxyle, l'ester éthylique du cyclopentanone-2-carboxyle, l'ester méthylique du cyclohexanone-2-carboxyle, l'ester éthylique du cyclohexanone-2-carboxyle.

**5.** Procédé de préparation de polyisocyanates organiques suivant la revendication 1, **caractérisé en ce que** les polyisocyanates sont mis à réagir en présence d'un catalyseur, avec des cétones cycliques à CH d'azide, de la formule générale (I) :

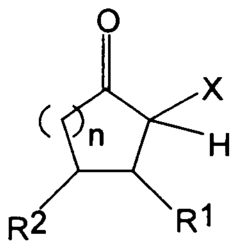

(I)

dans laquelle :

X représente un groupe électrocapteur,
$R^1$ et $R^2$ représentent indépendamment l'un de l'autre, les restes H, (cyclo)alcoyle en $C_1$-$C_{20}$, aryle en $C_6$-$C_{24}$, ester ou amide de (cyclo) alcoyle en $C_1$-$C_{20}$, ester ou amide d'aryle en $C_6$-$C_{24}$, reste aliphatique/aromatique mixte avec 1 à 24 atomes de carbone, qui peut être également une partie d'un cycle de 4 à 8 membres,
n représente un nombre entier allant de 0 à 5,
où par équivalent de radical isocyanate du polyisocyanate à bloquer, on met en oeuvre 0,8 à 1,2 mole de la cétone cyclique de la formule (I).

**6.** Procédé suivant la revendication 5, **caractérisé en ce que** le polyisocyanate organique contient une structure uretdione, isocyanurate, iminooxadiazinedione, acylurée, biuret ou allophanate.

**7.** Procédé suivant la revendication 5, **caractérisé en ce que** comme catalyseur, on met en oeuvre des bases de métal alcalin ou alcalino-terreux ou des sels de zinc ou d'autres acides de Lewis.

**8.** Utilisation des polyisocyanates organiques suivant les revendications 1 à 4, pour la préparation de laques, peintures ou vernis PUR.

**9.** Utilisation suivant la revendication 8, **caractérisée en ce que** les laques, peintures ou vernis PUR consistent en des laques, peintures ou vernis à cuire PUR monocomposant.

**10.** Laques, peintures ou vernis PUR contenant les polyisocyanates organiques suivant les revendications 1 à 4.

**11.** Utilisation de laques, peintures ou vernis suivant la revendication 10 pour le revêtement de bobines.